# EUROPÄISCHE PATENTSCHRIFT

(11) **EP 2 875 926 B1**
(45) Veröffentlichungstag und Bekanntmachung des Hinweises auf die Patenterteilung: **21.02.2018**
(21) Anmeldenummer: 14455006.8
(22) Anmeldetag: 07.11.2014
(51) Int. Cl.: B29C 33/38, C21D 6/00, C21D 7/13, C21D 8/00, C21D 1/18, C21D 1/25, C22C 38/00, C22C 38/40, C22C 38/44, C22C 38/46

(54) **Verfahren zur Herstellung von Kunststoffformen aus martensitischem Chromstahl und Kunststoffform**
Method for the production of plastic moulds made from martensitic chromium steel and plastic mould
Procédé de fabrication de moules en plastique à partir d'acier chromé martensitique et moule de plastique

(30) Priorität: 21.11.2013 AT 507742013
(43) Veröffentlichungstag der Anmeldung: 27.05.2015
(73) Patentinhaber: BÖHLER Edelstahl GmbH & Co KG, 8605 Kapfenberg (AT)
(72) Erfinder: Perko, Jochen, 8691 Kapellen (AT); Zinner, Silvia, 8642 St. Lorenzen (AT); Zunko, Horst, 8665 Langenwang (AT)
(74) Vertreter: Patronus IP Patent- und Rechtsanwälte

(56) Entgegenhaltungen:
- EP-A1- 1 052 304
- JP-A- 2007 277 639
- US-A1- 2004 101 430
- US-A1- 2010 276 038
- "KUNSTSTOFFFORMENSTAHL PLASTIC MOULD STEEL M333 2 MIT HOCHGLANZGARANTIE WITH A MIRRORED FINISH GUARANTEE", , 1. Oktober 2013 (2013-10-01), XP055183242, Gefunden im Internet: URL:http://www.bohler-international.com/en glish/files/M333DE.pdf [gefunden am 2015-04-15]

## Beschreibung

Die Erfindung bezieht sich auf ein Verfahren zur Herstellung von Kunststoffformen aus einem martensitischen Chromstahl.

Kunststoffformen erfahren im Produktionseinsatz eine Vielzahl von Beanspruchungen, denen der Werkstoff jeweils im Langzeitbetrieb standhalten muss.
Hauptsachlich umfassen diese Beanspruchungen des Werkstoffes korrosionschemische Belastungen, insbesondere bei erhohter Temperaturdurch die verwendeten Kunststoffpressmassen wie PVC, Verschleißbelastungen der Form-Arbeitsflachen durch abrasiv wirkende Pressmassenzusatze sowie mechanische, stoßweise wirkende Wechselbelastungen im Rahmen der jeweiligen Erzeugungsschüsse.
Weiters ist oftmals eine hohe Poliergute der Arbeitsflache der Form gefordert, um eine ansehnliche Oberflache der Erzeugnisse zu erreichen.
In zunehmendem Maße werden aus verformten und thermisch vergüteten Formstucken wie Stabe, Blocke und dergleichen Kunststoffformen spanabhebend gefertigt, die eine besonders hohe Maßgenauigkeit aufweisen. Dieses Vormaterial muss über den gesamten Innenquerschnitt gleiche Materialeigenschaften aufweisen und gleichartiges homogenes Gefüge, hohe Stahlreinheit sowie gleiche mechanische Materialkennwerte haben.
Als Werkstoff für Kunststoffformen mit obigem Anforderungsprofil werden derzeit zumeist martensitische Chromstahle verwendet. Kunststoffformen wurden vielfach auch aus einer Legierung gemäß AT 407 647 gefertigt und mit Erfolg eingesetzt. Allerdings waren gelegentlich die Herstellverfahren und die vorliegenden Konzentrationen der jeweiligen Legierungselemente derart, dass nicht alle gewünschten Werte das Eigenschaftsprofil des martensitischen korrosionsbestandigen Chromstahles im vollen Ausmaß bei jeder Fertigung erreichten.
Einen martensitischen Chromstahl mit in der Zusammensetzung weiten Konzentrationsgrenzen offenbart die US 2010/0276038 A1. Durch Anlasstemperaturen von 200 bis 400°C bei einem thermischen Vergüten werden hohe Zähigkeitswerte des Werkstoffes, ermittelt an Schlagbiegeproben, bei guten Härtewerten erreicht. Bei Anlasstemperaturen zwischen 530°C und 560°C ist die Zähigkeit des Materials bei etwas geringeren Härtewerten abgesenkt, die Korrosionsbeständigkeit jedoch wesentlich erhöht.

Die Erfindung setzt sich nun zur Aufgabe, ein Verfahren zur Herstellung von Kunststoffformen der eingangs genannten Art anzugeben, womit gleichermaßen hohe Korrosionsbeständigkeit auch bei erhöhten Temperaturen, Verschleißfestigkeit der formgebenden Arbeitsflache, hohe mechanische Werte, insbesondere der Zähigkeit zur Minimierung der Rissinitiation und zur Fertigungssicherheit, hohe Wechselfestigkeit und Harte, höchste Poliergüte und feine, über den gesamten Querschnitt der Form homogene Gefügestruktur des Werkstoffes erreicht werden.

Diese Aufgabe wird mit einem Verfahren mit den Merkmalen des Anspruchs 1 gelöst. Bevorzugte Ausführunsformen sind in Anspruch 2 und Anspruch 3 gekennzeichnet.

Die mit der Erfindung erzielten Vorteile sind im Wesentlichen darin zu sehen, dass eine verfahrensgemäß hergestellte Kunststoffform allenfalls eine gewünschte Korrosionsbeständigkeit auch bei erhöhten Temperaturen und eine gute Verschleißbeständigkeit, hohe mechanische Eigenschaftswerte, insbesondere Zähigkeit des Werkstoffes und bei höchster Poliergute eine feine gleichmäßige Gefügestruktur über den Querschnitt aufweist.

Für ein Erreichen obiger vorteilhafter Werkstoffeigenschaften der Kunststoffform ist die chemische Zusammensetzung des Stahles unter, wie gefunden wurde, Zugrundelegung der Reaktionskinetik der Elemente wichtig.

Kohlenstoff in engen Grenzen mit Gehalten von 0.22 bis 0.26 Gew.-% und Stickstoff im Konzentrationsbereich von 0.08 bis 0.15 Gew.-% sind diejenigen Elemente, die letztlich die Harte und Gefügestruktur bestimmen, wobei eine vorteilhafte Karbonitridbildung erreichbar ist. Höhere Stickstoffgehalte als 0.15 Gew.-% und insbesondere gleichzeitig höhere Kohlenstoffgehalte als 0.26 Gew.-% können mit den karbid-und nitridbildenden Elementen grobe Nitride, Karbide oder Karbonitride im Gefüge bilden, die einerseits die Polierfähigkeit des Stahles herabsetzen, die mechanischen Eigenschaften negativ beeinflussen und insbesondere die Korrosionsbeständigkeit vermindern, weil grobe chromhaltige Mischkarbide der Matrix im Oberflächenbereich Chrom entziehen bzw. den Chromgehalt verringern und dadurch einen Korrosionsangriff fördern.

Die jeweilige Aktivität der karbid- bzw. karbonitridbildenden Elemente Chrom, Molybdän, Vanadin, Wolfram, Titan, Hafnium, Zirkon, Niob und Tantal mit deren Wechselwirkung im Hinblick auf den Kohlenstoff- und Stickstoffgehalt ist, wie gefunden wurde, in den angegebenen Bereichen auf die Größe, die Form und die 5 Verteilung der gewünschten Reaktionsprodukte abgestimmt. Dabei ist es jedoch wesentlich, dass die Summengehalte an

| | |
|---|---|
| Mo+W/2 | = 0.11 bis 0.20 |
| Ti+Hf+Zr | = Spuren bis 0.05 |
| V+Nb+TA | = 0.15 bis 0.30 |
| Nb+Ta | = Spuren bis 0.04 |

jeweils in Gew.-% betragen.
Die obigen Summenformeln für einige Karbidbildner berücksichtigen erfindungsgemäß die Reaktionskinetik und die Kristallstruktur der Karbide. (Die Werte für Hf, Zr und Ta wurden über die freie Bildungsenthalpie der Verbindungen errechnet).

Bei einer Austenitisierung des homogenisierten Werkstoffes für eine Hartung erfolgt unter obigen Konzentrationsbedingungen eine weitgehende Auflösung der Cr-Mo-W-und großteils der V-Verbindungen mit (C und N). Lediglich feinste Misch-Karbonitride mit Vanadin und/oder Karbonitride von Nb und/oder Ta, die nur in geringstem Ausmaß einen metallischen Teil aus mehreren Elementen aufweisen, verbleiben homogen verteilt mit einem Durchmesser im Nano-Meter-Bereich in der Matrix und behindern ein Kornwachstum bei einer gegebenen Härtetemperatur von weniger als 1050°C, was letztlich entscheidend für eine Verbesserung der mechanischen Eigenschaften des Werkstoffes der Kunststoffform wirkt.

Um bei großen Formgrundteilen eine ausreichende Einhärtetiefe bzw. Durchhartung bei einer thermischen Vergütung zu erwirken, sind Konzentrationen von Mangan mit 0.15 bis 0.60 und von Nickel mit 0.30 bis 0.60 jeweils in Gew.-% vorgesehen. Um jedoch eine austenitstabilisierende Wirkung dieser Elemente zu kontrollieren, ist ein Gehalt von (Mn+Ni) mit 0.55 bis 0.95 Gew.-% erfindungsgemäß einschränkend vorgesehen.

Weil, wie oben dargelegt, in der Gefügeausbildung eine Vergröberung der Karbonitridausscheidungen verhindert wird, entsteht zwangsläufig keine merkbare Abreicherung von Cr an deren Oberflachen, was einen Korrosionsangriff ebendort verhindert, wenn die Legierung einen PRE(N)-Wert von über 14.4 bis etwa 15.7 aufweist. Der PREN-Wert ergibt sich aus (%Cr+3.3x%Mo+16x%N).

Um gegebene Mikroseigerungen im Gußstück abzubauen bzw. eine Materialhomogenitat zu fordern, ist es vorteilhaft, eine Verformung des Rohblockes bei einer Temperatur von über 1050°C mit einem Umformgrad von hoher als 2.5-fach durchzufuhren. (Der Umformgrad ist der Quotient aus Ausgangsquerschnitt gebrochen durch Endquerschnitt).

Bei einer Hartung des in seiner chemischen Zusammensetzung erfindungsgemäß gekennzeichneten Werkstoffes muss über den gesamten Querschnitt des Formengrundteiles Oder der Form eine martensitische Gefügestruktur eingestellt werden, so dass eine forcierte Kühlung des Austenits zur Martensitbildung anzuwenden ist. Geringe Abkühlgeschwindigkeiten können an den Korngrenzen gegebenenfalls auch in geringem Ausmaß eine Ausbildung einer perlitischen oder eine Zwischenstufen- Struktur bewirken, welche die Zähigkeitswerte des Materials entscheidend verschlechtert. Erfindungsgemäß ist daher eine Abkühlungsgeschwindigkeit von der Austenittemperatur des Stahles mit einem Wert A von kleiner als 24 vorzunehmen. (Der Wert A ergibt sich aus der Abkühlzeit in Sekunden von 800°C auf 500°C gebrochen durch 100).

Ein Anlassen der geharteten Rohform bzw. Form erfordert zur kompletten Umwandlung des Austenits ein mindestens zweimaliges Anwärmen des Teiles auf eine Temperatur im Bereich von 510 bis 550°C, um eine Harte des Werkstoffes im Bereich von 48 bis 52 HRC einzustellen. Erfindungsgemäß beträgt danach die Zähigkeit des Werkstoffes mindestens 60 J gemessen mit einer Schlagbiegeerprobung. (Nach ASTM, E23)

Bevorzugte Ausführungsformen des erfindungsgemäßen Verfahrens sind in den Ansprüchen 2 und 3 gekennzeichnet.

Ein Werkstoff mit der obigen Zusammensetzung vermittelt nach einer Wärmebehandlung der Kunststoffform eine Harte von 48 bis 52 HRC mit einer Materialzähigkeit von mindestens 60 J gemessen an Schlagbiegeproben gemäß ASTM, E23.

Betreffend die Duktilität des Materials der Form in einsatzbereitem Zustand sind erfindungsgemäß im Zugversuch nach EN 10002-1 die Bruchdehnung A mindestens 5% und die Einschnürung mindestens 10%.

Diese mechanischen Werte sind Mindestwerte, die allenfalls auch bei ungünstigster Legierungslage zumeist übertroffen werden. Zähigkeitswerte von mindestens 190 J bei einer Bruchdehnung A von 10% und einer Einschnürung Z von mindestens 40% sind durchwegs erreichbar.

Anhand von Ergebnissen aus den Entwicklungsarbeiten soll nachfolgend die Erfindung naher erläutert werden.

Aus der Tabelle 1 sind Legierungen nach dem Stand der Technik und erfindungsgemäße Werkstoffe gegenübergestellt.

Die Legierung 1 entspricht dem Stahl AISI 420 bzw. X42CM3, welche Materialien vielfach bei chemisch angreifenden Pressmassen mit verschleißenden Zusätzen als Form eingesetzt werden.

Als weitere Legierung 2 zum Stand der Technik ist ein Werkstoff gemäß EP 1 052 304 untersuchtworden.

Zum Stand der Technik zahlt auch die Legierung 3, welche ein hohes Durchhärtevermogen aufweist.

Die Legierung 4 und die Legierung 5 sind erfindungsgemäß hergestellte mikrolegierte Werkstoffe für Kunststoffformen.

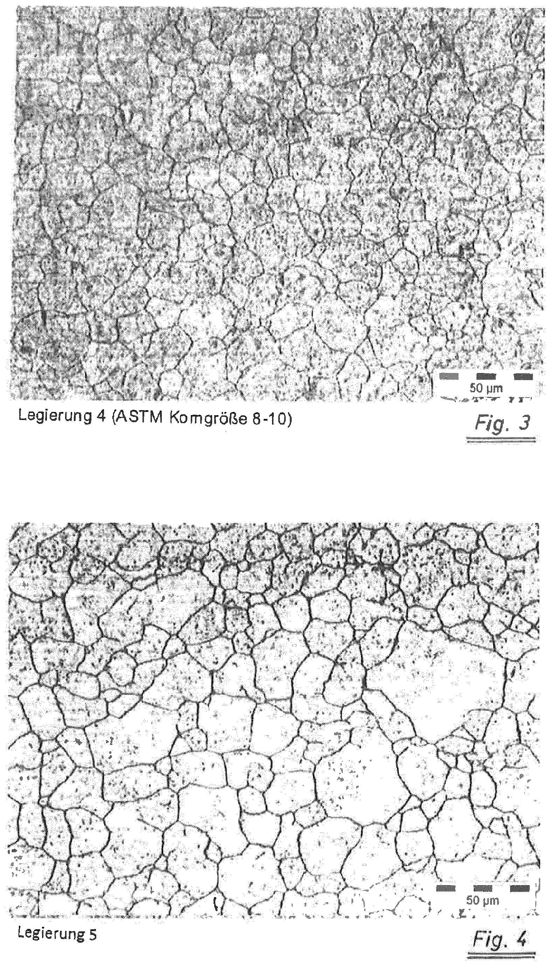

Anhand von Gefügeaufnahmen ist die Wirkung der nach dem erfindungsgemäßen Verfahren zugesetzten Mikrolegierungselemente V und Nb veranschaulicht.

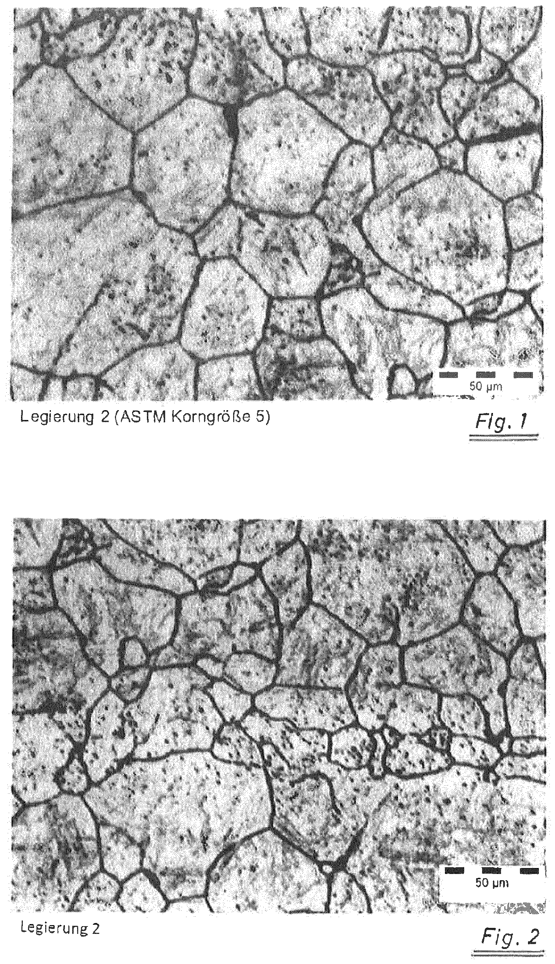

Fig. 1 und Fig. 2 zeigen das Gefüge der Legierung 2 mit Grobkorn (ASTM 5) und Perlit- oder Zwischenstufenbereichen an den Korngrenzen, welche die mechanischen Eigenschaften des Werkstoffes in hohem Maße verschlechtern.
Hingegen zeigen Fig. 3 und Fig. 4 das feine Mikrogefüge mit einer ASTM-Korngröße von 8 bis 10 der nach dem erfindungsgemäßen Verfahren hergestellten Legierungen 4 und 5.

Die Schlagbiegearbeit an ungekerbten Proben des Materials hangt von der Austenitisierungstemperatur der Abkühlungsgeschwindigkeit und den Anlassbedingungen ab.

Zur Unterscheidung der Legierung 2 und der Legierung 5 nach der Erfindung wurden die gleichen Vergütungsbedingungen gewählt.

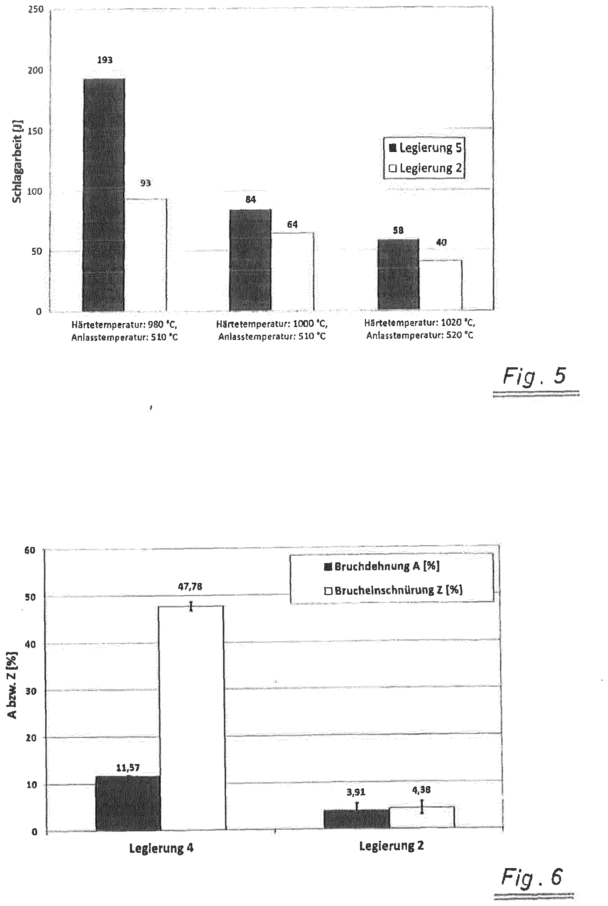

In Fig. 5 sind die Messergebnisse der untersuchten Legierungen gegenübergestellt, wobei deutlich eine Verbesserung der Zähigkeit des Werkstoffes mit sinkender Härtetemperatur ermittelt wurde.

Ein Vergleich der Bruchdehnung und der Brucheinschnürung im Zugversuch der Legierung 2 und der nach dem erfindungsgemäßen Verfahren hergestellten Legierung 4 zeigt Fig. 6.

Bei der Härtung der Proben erfolgte eine Abkühlung in einem Ausmaß von A = 20. 30

Die geringeren Werte der Legierung 2 sind auf eine Bildung von Perlit-Phasen an den Korngrenzen zurückzuführen, wie dies insbesondere aus Fig. 2 hervorgeht.

Unter dem insbesondere in den Patentansprüchen verwendeten Ausdruck "Spuren bis...." wird auch verstanden, dass das jeweilige Element praktisch nicht vorhanden ist bzw. könnte dieser Ausdruck durch "0 bis ...." ersetzt werden.

## Patentansprüche

1. Verfahren zur Herstellung von Kunststoffformen mit jeweils hoher mechanischer und korrosionschemischer Belastbarkeit sowie Poliergute, wobei ein Stahlblock mit einer Zusammensetzung in Gew.-% von
| | | | |
|---|---|---|---|
| C | = | 0.22 | bis 0.26 |
| Si | = | 0.01 | bis 0.35 |
| Mn = | | 0.15 | bis 0.60 |
| P | = | | max. 0.025 |
| S | = | | max. 0.003 |
| Cr | = | 12.00 | bis 14.00 |
| Mo = | | 0.10 | bis 0.18 |
| Ni | = | 0.30 | bis 0.60 |
| V | = | 0.15 | bis 0.25 |
| W = | | Spuren | bis 0.20 |
| Cu | = | Spuren | bis 0.30 |
| Co | = | Spuren | bis 0.20 |
| Ti | = | Spuren | bis 0.02 |
| Hf | = | Spuren | bis 0.02 |
| Zr | = | Spuren | bis 0.02 |
| Al | = | 0.002 | bis 0.02 |
| Nb | = | Spuren | bis 0.04 |
| B | = | Spuren | bis 0.001 |
| N | = | 0.08 | bis 0.15 |
| Ta | = | Spuren | bis 0.04 |
| As | = | Spuren | bis 0.005 |
mit der Maßgabe:
| | | |
|---|---|---|
| Mn+Ni | = 0.55 | bis 0.95 |
| Mo+W/2 | = 0.11 | bis 0.20 |
| Ti+Hf+Zr | = Spuren | bis 0.05 |
| V+Nb+Ta | = 0.15 | bis 0.30 |
| Nb+Ta | Spuren | bis 0.04 |
Fe und Verunreinigungselemente = Rest und
mit einem Wert (PREN) für die Korrosionsbeständigkeit gebildet aus % Cr+(3,3x%Mo)+ (16x%N) von über 14,5 bis 15,7 hergestellt und bei einer Temperatur von hoher als 1050°C mit einem Umformgrad von hoher 2.5-fach primär verformt wird, worauf, gegebenenfalls nach einer Zwischenabkühlung, aus dem Rohling bei einer Temperatur von weniger als 1050°C eine Fertigung von mindestens einem Formengrundteil erfolgt, aus welchem, gegebenenfalls nach einer spanabhebenden Bearbeitung, eine Kunststoffform hergestellt und diese Oder das Formengrundteil austenitisiert und mit einer Abkühlgeschwindigkeit mit einem Wert (A) gebildet aus der Abkühlzeit von 800°C auf 500°C in Sekunden gebrochen durch 100 von kleiner als 24 gehärtet wird, worauf eine mindestens zweimalige Anlassbehandlung bei einer Temperatur im Bereich von 510 bis 550°C erfolgt, bei welcher eine Harte des Werkstoffes von 48 bis 52 HRC und eine Zähigkeit desselben, gemessen an Schlagbiegeproben gemäß ASTM,E23, von mindestens 60 J gebildet werden, wonach letztlich eine spanende Endbearbeitung und, wenn vorgesehen, ein Polieren der Kunststoffform erfolgt.

2. Verfahren zur Herstellung von Kunststoffformen nach Anspruch 1, wobei ein Stahlblock eine Zusammensetzung in Gew.-% von
| | | | |
|---|---|---|---|
| C | | 0.23 | bis 0.25 |
| Si | | 0.20 | bis 0.30 |
| Mn | = | 0.32 | bis kleiner 0.5 |
| P | | | max. 0.022 |
| S | | | max. 0.0008 |
| Cr | | 13.00 | bis 13.60 |
| Mo | = | 0.12 | bis 0.16 |
| Ni | | 0.38 | bis 0.48 |
| V | | 0.18 | bis 0.21 |
| W | | Spuren | bis 0.20 |
| Cu | | Spuren | bis 0.30 |
| Co | | Spuren | bis 0.20 |
| Ti | | Spuren | bis 0.008 |
| Hf | | Spuren | bis 0.02 |
| Zr | | Spuren | bis 0.02 |
| Al | | 0.006 | bis 0.018 |
| Nb | = | Spuren | bis 0.03 |
| B | = | Spuren | bis 0.001 |
| N | = | 0.10 | bis 0.13 |
| Ta | = | Spuren | bis 0.04 |
| As | | Spuren | bis 0.005 |
mit der Maßgabe:
| | |
|---|---|
| Mn+Ni | = 0.50 bis 0.9 |
| Mo+W/2 | =0.14 bis 0.18 |
| Ti+Hf+Zr | = Spuren bis 0.006 |
| V+Nb+Ta | =0.18 bis 0.25 |
| Nb+Ta | = 0.005 bis 0.03 |
| Fe und Verunreinigungselemente = Reste aufweist | |

3. Verfahren zur Herstellung von Kunststoffformen nach einem der Anspruche 1 Oder 2, wobei nach der spanabhebenden Bearbeitung die Kunststoffform bei einer Temperatur von 965 bis 995°C austenitisiert und mit einer Abkühlgeschwindigkeit mit einem Wert (A), gebildet aus der Abkühlzeit von 800°C auf 500°C in Sekunden gebrochen durch 100, von 20 Oder kleiner gehärtet wird, worauf eine Anlassbehandlung erfolgt, bei welcher eine Harte des Werkstoffes von hoher als 48 HRC, jedoch geringer als 50 HRC (< 50 HRC) und eine Zähigkeit desselben von mindestens 190 J gebildet werden.

## Claims

1. Process for the production of plastic molds, each having a high mechanical and corrosion chemical loadability and polishing quality, wherein a steel block having a composition in wt-% of
| | | | |
|---|---|---|---|
| C | = | 0.22 | to 0.26 |
| Si | = | 0.01 | to 0.35 |
| Mn | = | 0.15 | to 0.60 |
| P | = | | max. 0.025 |
| S | = | | max. 0.003 |
| Cr | = | 12.00 | to 14.00 |
| Mo | = | 0.10 | to 0.18 |
| Ni | = | 0.35 | to 0.50 |
| V | = | 0.15 | to 0.25 W |
| W | = | traces | up to 0.20 |
| Cu | = | traces | up to 0.30 |
| Co | = | traces | up to 0.20 |
| Ti | = | traces | up to 0.02 |
| Hf | = | traces | up to 0.02 |
| Zr | = | traces | up to 0.02 |
| Al | = | 0.002 | to 0.02 |
| Nb | = | traces | up to 0.04 |
| B | = | traces | up to 0.001 |
| N | = | 0.08 | to 0.15 |
| Ta | = | traces | up to 0.04 |
| As | = | traces | up to 0.005 |
with the proviso:
| | | | |
|---|---|---|---|
| Mn + Ni | = | 0.55 | to 0.95 |
| Mo + W / 2 | = | 0.11 | to 0.20 |
| Ti + Hf + Zr | = | traces | up to 0.05 |
| V + Nb + Ta = | | 0.15 | to 0.30 |
| Nb + Ta | = | traces | up to 0.04 |
Fe and impurity elements = balance and having a (PREN) value for corrosion resistance, composed of % Cr + (3,3x%Mo)+ (16x%N) of greater than 14.5 to about 15.7, is prepared and primarily deformed at a temperature higher than 1050° C with a degree of deformation higher than 2.5 times, whereupon, optionally after an intermediate cooling, from the blank at a temperature of less than 1050° C, a fabrication of least one mold base takes place, from which, optionally after a machining, a plastic mold is produced and this or the mold base is austenised and cured at a cooling rate with a value (A), composed of the cooling time from 800° C to 500° C in seconds divided by 100 of less than 24, after which at least two tempering treatments at a temperature in the range of from 510 to 550° C are carried out, in which a hardness of the material of 48 to 52 HRC and a toughness of the same, measured at impact bending samples according to ASTM,E23; of at least 60 J are formed, after which finally a machining and, if intended, a polishing of the plastic mold is carried out.

2. A method for producing plastic molds according to claim 1, wherein a steel block has a composition in wt-% of
| | | |
|---|---|---|
| C | 0.23 | to 0.25 |
| Si | 0.20 | to 0.30 |
| Mn = | 0.32 | to less than 0.5 |
| P | max. | 0.022 |
| S | max. | 0.0008 |
| Cr | 13.00 | to 13.60 |
| Mo = | 0.12 | to 0.16 |
| Ni | 0.38 | to 0.48 |
| V | 0.18 | to 0.21 W |
| W | traces | up to 0.20 |
| Cu | traces | up to 0.30 |
| Co | traces | up to 0.20 |
| Ti | traces | up to 0.008 |
| Hf | traces | up to 0.02 |
| Zr | traces | up to 0.02 |
| Al | 0.006 | to 0.018 |
| Nb | = | traces up to 0.03 |
| B | = | traces up to 0.001 |
| N | = | 0.10 to 0.13 |
| Ta | = | traces up to 0.04 |
| As | | traces up to 0.005 |
with the proviso:
| | | |
|---|---|---|
| Mn + Ni | = | 0.50 to 0.9 |
| Mo + W / 2 | = | 0.14 to 0.18 |
| Ti + Hf + Zr | = | traces up to 0.006 |
| V + Nb + Ta | = | 0.18 to 0.25 |
| Nb + Ta | = | 0.005 to 0.03 |
| Fe and impurity elements = remainder. | | |

3. Process for producing plastic molds according to any one of claims 1 or 2, wherein after the machining, the plastic mold is austenitized at a temperature of 965 to 995° C and cured at a cooling rate of a value (A) composed of the cooling time from 800° C to 500° C in seconds divided by 100 of 20 or smaller, followed by a tempering treatment in which a hardness of the material of higher than 48 HRC, but less than 50 HRC (<50 HRC) and a toughness thereof of at least 190 J are formed.

## Revendications

1. Procédé pour la production de moules en plastique, chacune avec une grande capacité mécanique et à la corrosion chimique et à la qualité de polissage, dans lequel un lingot d'acier ayant une composition en % en poids de
| | | | |
|---|---|---|---|
| C | = | 0,22 | à 0,26 |
| Si | = | 0,01 | à 0,35 |
| Mn | = | 0,15 | à 0,60 |
| P | = | | max. 0,025 |
| S | = | | max. 0,003 |
| Cr | = | 12,00 | à 14,00 |
| Mo | = | 0,10 | à 0,18 |
| Ni | = | 0,30 | à 0,60 |
| V | = | 0,15 | à 0,25 |
| W | = | traces | jusqu'à 0,20 |
| Cu | = | traces | jusqu'à 0,30 |
| Co | = | traces | jusqu'à 0,20 |
| Ti | = | traces | jusqu'à 0,02 |
| Hf | = | traces | jusqu'à 0,02 |
| Zr | = | traces | jusqu'à 0,02 |
| Al | = | 0,002 | à 0,02 |
| Nb | = | traces | jusqu'à 0,04 |
| B | = | traces | jusqu'à 0,001 |
| N | = | 0,08 | à 0,15 |
| Ta | = | traces | jusqu'à 0,04 |
| As | = | traces | jusqu'à 0,005 |
avec la limitation:
| | | | |
|---|---|---|---|
| Mn + Ni | = | 0,55 | à 0,95 |
| Mo + W / 2 | = | 0,11 | à 0,20 |
| Ti + Zr + Hf | = | traces | jusqu'à 0,05 |
| V + Nb + Ta = | | 0,15 à | 0,30 |
| Nb + Ta | | traces | jusqu'à 0;04 |
Fe et des éléments d'impureté = repos et avec une valeur (PREN) pour la résistance à la corrosion composé de % de Cr + (3,3x%Mo)+ (16x%N) de plus que 14,5 à 15,7 est fabriqué et est primairement déformé à une température supérieure à 1050° C avec un rapport de réduction supérieur à 2,5 fois, après quoi, éventuellement après un refroidissement intermédiaire, à partir de l'ébauche à une température inférieure à 1050° C, une fabrication d'au moins une partie de moule de base est faite de laquelle, éventuellement après un usinage, un moule en plastique est réalisé, et celui-ci ou la partie de moule de base est austénitisé et durci à une vitesse de refroidissement d'une valeur (A), composé du temps de refroidissement de 800° C à 500° C en secondes divisé par 100 de moins de 24, suivant quoi un traitement de recuit est effectué au moins deux fois à une température dans la plage de 510 à 550° C, dans lequel une dureté de la matière de 48 à 52 HRC et une ténacité de la même, mesurée par des spécimens d'essai de choc selon ASTM,E23, d'au moins 60 J, sont formées, après quoi en fin de compte une coupe de finition et, si prévu, un polissage du moule en plastique est effectuée.

2. Procédé pour la production de moules en plastique selon la revendication 1, dans lequel un bloc d'acier comporte une composition en % en poids de
| | | | |
|---|---|---|---|
| C | | 0,23 | à 0,25 |
| Si | | 0,20 | à 0,30 |
| Mn | = | 0,32 | à inférieur à 0,5 |
| P | | | max. 0,022 |
| S | | | max. 0,0008 |
| Cr | | 13,00 | à 13,60 |
| Mo | = | 0,12 | à 0,16 |
| Ni | | 0,38 | à 0,48 |
| V | | 0,18 | à 0,21 |
| W | | traces | jusqu'à 0,20 |
| Cu | | traces | jusqu'à 0,30 |
| Co | | traces | jusqu'à 0,20 |
| Ti | | traces | jusqu'à 0,008 |
| Hf | | traces | jusqu'à 0,02 |
| Zr | | traces | jusqu'à 0,02 |
| Al | | 0,006 | à 0,018 |
| Nb | = | traces | jusqu'à 0,03 |
| B | = | traces | jusqu'à 0,001 |
| N | = | 0,10 | à 0,13 |
| Ta | = | traces | jusqu'à 0,04 |
| As | | traces | jusqu'à 0,005 |
avec la limitation:
| | | | |
|---|---|---|---|
| Mn + Ni | = | 0,50 | à 0,9 |
| Mo + W / 2 | = | 0,14 | à 0,18 |
| Ti + Zr + Hf | = | traces | jusqu'à 0,006 |
| V + Nb + Ta | = | 0,18 | à 0,25 |
| Nb + Ta | = | 0,005 | à 0,03 |
| Fe et éléments d'impureté = repos. | | | |

3. Procédé pour la production de moules en plastique selon l'une quelconque des revendications 1 ou 2, dans lequel la forme en matière plastique est austénitisée après l'usinage à une température de 965 à 995° C et durci avec une vitesse de refroidissement d'une valeur (A), composé du temps de refroidissement de 800° C à 500° C en secondes divisé par 100 de 20 ou moins, après quoi un traitement de recuit est effectué, dans lequel une dureté de la matière supérieure à 48 HRC mais inférieure à 50 HRC (<50 HRC) et une dureté de celle-ci d'au moins 190 J sont formées.
